# EUROPÄISCHE PATENTSCHRIFT

(11) **EP 2 436 594 B1**
(45) Veröffentlichungstag und Bekanntmachung des Hinweises auf die Patenterteilung: **19.07.2017**
(21) Anmeldenummer: 11181075.0
(22) Anmeldetag: 13.09.2011
(51) Int. Cl.: B63G 8/00

(54) **Unterseeboot**
Submarine
Submersible

(30) Priorität: 01.10.2010 DE 102010047324
(43) Veröffentlichungstag der Anmeldung: 04.04.2012
(73) Patentinhaber: ThyssenKrupp Marine Systems GmbH, 24143 Kiel (DE)
(72) Erfinder: Becker, Roland, 24226 Heikendorf (DE); Paul, Axel, 24622 Gnutz (DE); Stäuble, Ulrich, 24232 Schönkirchen (DE)
(74) Vertreter: thyssenkrupp Intellectual Property GmbH

(56) Entgegenhaltungen:
- WO-A1-98/52744
- DE-C1- 10 031 409
- GB-A- 100 346
- US-A- 1 169 970
- US-A- 1 346 743
- US-A- 2 656 810
- US-A1- 2006 062 973

## Beschreibung

Die Erfindung betrifft ein Unterseeboot mit mindestens einer Lagerplattform zum Lagern mindestens eines Aggregats.

Es ist bekannt, in militärischen Unterseebooten Aggregate, wie Antriebsmotoren, Pumpen und dergleichen elastisch auf Lagerplattformen zu lagern, wobei die Lagerplattformen wiederum elastisch auf einem mit dem Druckkörper des Unterseebootes verbundenen Bootsfundament gelagert sind. Die Lagerplattformen werden aus vorgefertigten Stahlprofilen, vorzugsweise Doppel-T-Trägern und anderen speziell angefertigten Stahlbauteilen gefertigt, wobei die Doppel-T-Träger eine Tragstruktur einer Lagerplattform bilden. Ein Beispiel vom Stand der Technik ist in Dokument WO 9 852 744 dargestellt. Es hat sich gezeigt, dass bei den bekannten Lagerplattformen die Anzahl der Eigenfrequenzen in bestimmten Frequenzbereichen sehr hoch ist. Da die gelagerten Aggregate eine Vielzahl von Anregefrequenzen erzeugen und auch auf die Lagerplattform übertragen, werden die Lagerplattformen in der Regel auch in einigen ihrer Eigenfrequenzen angeregt. Hieraus resultiert Körperschall, der ggf. direkt über das Bootsfundament oder über Nebenwege an den Druckkörper weitergeleitet werden kann, was zu einer bei einem militärischen Unterseeboot unerwünschten akustischen Signatur führt.

Vor diesem Hintergrund liegt der Erfindung die Aufgabe zugrunde, ein Unterseeboot mit mindestens einer Lagerplattform zum Lagern von Aggregaten zu schaffen, bei dem die Eigenfrequenzanregung der Lagerplattform zu deutlich niedrigeren Körperschallpegeln führt.

Gelöst wird diese Aufgabe durch ein Unterseeboot mit den in Anspruch 1 angegebenen Merkmalen. Vorteilhafte Weiterbildungen dieses Unterseebootes ergeben sich aus den Unteransprüchen, der nachfolgenden Beschreibung sowie der Zeichnung. Hierbei können gemäß der Erfindung die in den Unteransprüchen angegebenen Merkmale jeweils für sich aber auch in technisch sinnvoller Kombination die erfindungsgemäße Lösung gemäß Anspruch 1 weiter ausgestalten.

Das erfindungsgemäße Unterseeboot, bei dem es sich vorzugsweise um ein militärisches Unterseeboot handelt, weist in üblicher Weise einen Druckkörper auf. In dem Druckkörper ist mindestens eine Lagerplattform zur Lagerung mindestens eines Aggregats, beispielsweise eines Antriebsmotors, einer Pumpe oder einer ähnlichen schwingungserzeugenden Maschine, angeordnet. Hierbei ist die Lagerplattform vorzugsweise elastisch auf einem mit dem Druckkörper des Unterseebootes verbundenen Bootsfundament gelagert.

Gemäß der Erfindung ist die Lagerplattform aus einem Faserverbundmaterial und Kunststoff aufgebaut. Als Faserverbundmaterialien werden bevorzugt faserverstärkte Kunststoffe wie z.B. kohlefaserverstärkte oder glasfaserverstärkte Kunststoffe verwendet. Die aus diesen Materialen und Kunststoff aufgebaute Lagerplattform weist vergleichbare Festigkeitseigenschaften wie die bislang üblichen, aus Stahl aufgebauten Lagerplattformen auf. Gegenüber diesen Lagerplattformen zeichnet sich die erfindungsgemäße Lagerplattform allerdings dadurch aus, dass sie aufgrund ihres Aufbaus aus Faserverbundmaterial und Kunststoff ein deutlich besseres Schwingungsdämpfungsvermögen aufweist. Darüber hinaus ist das Gewicht einer aus Faserverbundmaterial und Kunststoff aufgebauten Lagerplattform im Vergleich zu einer aus Stahlteilen hergestellten Lagerplattform deutlich geringer, was es ermöglicht, zur Beeinflussung des Eigenschwingungsverhaltens der Lagerplattform gegebenenfalls auf der Lagerplattform gezielt Zusatzmassen anzubringen, ohne dass das Gewicht der erfindungsgemäß verwendeten Lagerplattform das Gewicht der bislang üblichen Lagerplattformen in Unterseebooten übersteigt. Insofern ermöglicht die erfindungsgemäße Ausgestaltung der Lagerplattform eine erhebliche Verringerung des auf den Druckkörper des Unterseebootes übertragenen Körperschalls, der günstigstenfalls praktisch nicht mehr wahrnehmbar ist.

Vorteilhaft ermöglicht die Verwendung von Faserverbundmaterialien und Kunststoff bei der Herstellung der erfindungsgemäßen Lagerplattform auch, diese, wie es bei einer bevorzugten Weiterbildung der Erfindung vorgesehen ist, einstückig auszubilden. In diesem Zusammenhang ist unter einer einstückigen Lagerplattform auch eine solche Plattform zu verstehen, bei der mehrere Bauteile beispielsweise mittels einer Klebverbindung oder anderweitig stoffschlüssig zur Bildung der Lagerplattform zusammengefügt sind, so dass die Lagerplattform nach ihrer Herstellung nicht mehr reversibel in ihre Einzelbauteile demontiert werden kann.

Erfindungsgemäß weist die Lagerplattform einen flächigen Grundkörper auf, der mittels Trägern versteift ist. Unter einem flächigen Grundkörper ist ein sich hauptsächlich in einer Ebene erstreckendes Bauteil zu verstehen. Hierbei kann es sich um eine ebene Platte handeln oder um eine Platte, deren Querschnitt zur Erhöhung der Steifigkeit und Tragfähigkeit beispielsweise wellenförmig profiliert ist oder wannenförmige Vertiefungen aufweist. Der Grundkörper dient vorzugsweise zur Aufstellung mindestens eines Aggregates, das dort bevorzugt auf Feder-/Dämpferelementen schwingungsgedämpft gelagert ist. Bei den Trägern handelt es sich im statischen Sinne um im Verhältnis zu ihrer Länge schmale Balken, die besonders gut geeignet sind, Biegebelastungen aufzunehmen. Die Träger können den Grundkörper der Lagerplattform an dessen Außenseiten begrenzen und so quasi einen Rahmen bilden.

Darüber hinaus können die Träger auch innerhalb der von dem Grundkörper aufgespannten Fläche angeordnet sein. Bevorzugt weisen die Träger ein rechteckiges Querschnittprofil auf.

Gemäß der Erfindung ist der Grundkörper in die Träger eingegliedert, d.h. integriert. Demzufolge bildet der Grundkörper auch einen Teil der Träger. Die Integration des Grundkörpers in die Träger ist derart, dass an beiden Flachseiten des Grundkörpers jeweils ein Abschnitt der Träger auskragt. Die Träger bilden also an den voneinander abgewandten Flachseiten des Grundkörpers Vorsprünge, die bezogen auf eine Ebene in der Haupterstreckungsrichtung des Grundkörpers vorzugsweise senkrecht ausgerichtet sind.

Weiter bevorzugt können die Träger der Lagerplattform mehrschichtig ausgebildet sein. Dementsprechend können die Träger aus mehreren aneinander angrenzenden Abschnitten ausgebildet sein, die sich hinsichtlich des Materials, aus dem sie bestehen und ggf. hinsichtlich ihrer Abmessungen unterscheiden. Vorteilhaft sind das Material, die Dicke und die Anzahl der einzelnen Schichten so gewählt, dass das Schwingungsdämpfungsvermögen der Träger besonders gut an die von dem auf der Lagerplattform gelagerten Aggregat erzeugten Anregefrequenzen angepasst ist. Zweckmäßigerweise sind die einzelnen Schichten der Träger bezogen auf eine Grundausrichtung des Grundkörpers senkrecht übereinander angeordnet.

Der Grundkörper der Lagerplattform ist vorteilhafterweise aus einem Multiaxialgelege aus Faserverbundmaterial ausgebildet. D. h., der Grundkörper kann aus mehreren übereinander angeordneten Fasermatten mit unidirektionaler Faserausrichtung bestehen, wobei die einzelnen Fasermatten derart ausgerichtet sind, dass sich die Faserausrichtung der einzelnen Fasermatten unterscheidet. Gemeinsam sind die Fasermatten bei dieser Ausgestaltung in einer Kunststoffmatrix eingebettet. Zweckmäßigerweise ist der Grundkörper zumindest aus einem triaxialen Gelege ausgebildet, um Schwingungsanregungen und Schockbeanspruchungen aus beliebiger Richtung dämpfen zu können. Zur Herstellung des Grundkörpers kann das Gelege in eine mit dem gewünschten Profil des Grundkörpers korrespondierende Form gelegt werden und anschließend in Kunstharz getränkt und ausgehärtet werden.

Bevorzugt ist vorgesehen, dass die Abschnitte der Träger, die sich an eine erste Flachseite des Grundkörpers anschließen, jeweils von einem unidirektionalen Gelege aus Faserbundmaterial gebildet werden. Demnach weisen alle Fasern dieser Trägerabschnitte die gleiche Faserausrichtung auf. Die Fasern dieser Trägerabschnitte verlaufen hierbei zweckmäßigerweise parallel zur Hauptabmessung bzw. Längsausdehnung der Träger. Dies ist insofern vorteilhaft, als Faserverbundbauteile mit einer gemeinsamen Faserausrichtung in Richtung längs zur Faserrichtung eine besonders ausgeprägte Dehn- bzw. Biegesteifigkeit aufweisen, die der Querkraftbiegung des zu lagernden Aggregats entgegenwirkt. Zweckmäßigerweise sind diese Trägerabschnitte mit unidirektionaler Faserausrichtung an der Flachseite des Grundkörpers angeordnet, die in einer Aufstellposition der Lagerplattform einer Unterseite des Grundkörpers bildet.

In einer weiteren vorteilhaften Ausgestaltung sind die Abschnitte der Träger, die sich an eine zweite Flachseite des Grundkörpers anschließen, jeweils von einer Schicht aus Schaumstoff gebildet. Diese aus geschäumtem Kunststoff bestehende Schicht, die mit dem Grundkörper verklebt ist, weist zwar eine geringe Festigkeit auf, mit ihr kann aber der Querschnitt und damit das Flächenträgheitsmoment der einzelnen Träger bei einer zu vernachlässigenden Gewichtszunahme erheblich vergrößert werden, was auf diese Weise auch zu einer Verbesserung der Steifigkeitseigenschaften der Träger führt.

Zweckmäßigerweise schließt sich an die Schicht aus Schaumstoff an einer von dem Grundkörper abgewandten Seite eine unidirektionale Schicht aus Faserverbundmaterial an. Diese über den Schaumstoffabschnitt innerhalb der Träger von dem Grundkörper beabstandete Schicht kann mit der Schaumstoffschicht verklebt sein und dient ebenfalls zur Steigerung der Biegesteifigkeit der Träger. Auch in dieser Schicht sind die einzelnen Fasern unidirektional in Richtung der Längsausdehnung der Träger ausgerichtet.

Schließlich sind die Träger besonders vorteilhaft mit einem Multiaxialgelege aus Faserverbundmaterial ummantelt. D. h., außenseitig der einzelnen übereinander angeordneten Schichten, aus denen die einzelnen Träger aufgebaut sind, ist jeweils ein Gelege angeordnet, bei dem Fasermatten mit jeweils unidirektional ausgerichteten Fasern bezogen auf die Faserausrichtung quer und/oder schräg übereinander ausgerichtet und gemeinsam in einer Kunststoffmatrix eingebettet sind. Durch diese Maßnahme wird die Steifigkeit der einzelnen Träger nochmals erhöht, wobei die in den beiden äußeren Trägerschichten mit unidirektionaler Faserausrichtung herrschenden unterschiedlichen Schubspannungen von dem Multiaxialgelege ausgeglichen werden.

Nachfolgend ist die Erfindung anhand eines in der Zeichnung dargestellten Ausführungsbeispiels näher erläutert. In der Zeichnung zeigt:
- Figur 1: schematisch stark vereinfacht in einer Querschnittansicht einen Druckkörper eines Unterseebootes mit einer darin angeordneten Lagerplattform für Aggregate,
- Figur 2: die Lagerplattform nach Figur 1 in einer perspektivischen Darstellung und
- Figur 3: eine vergrößerte Einzelheit A der Lagerplattform nach Figur 2.

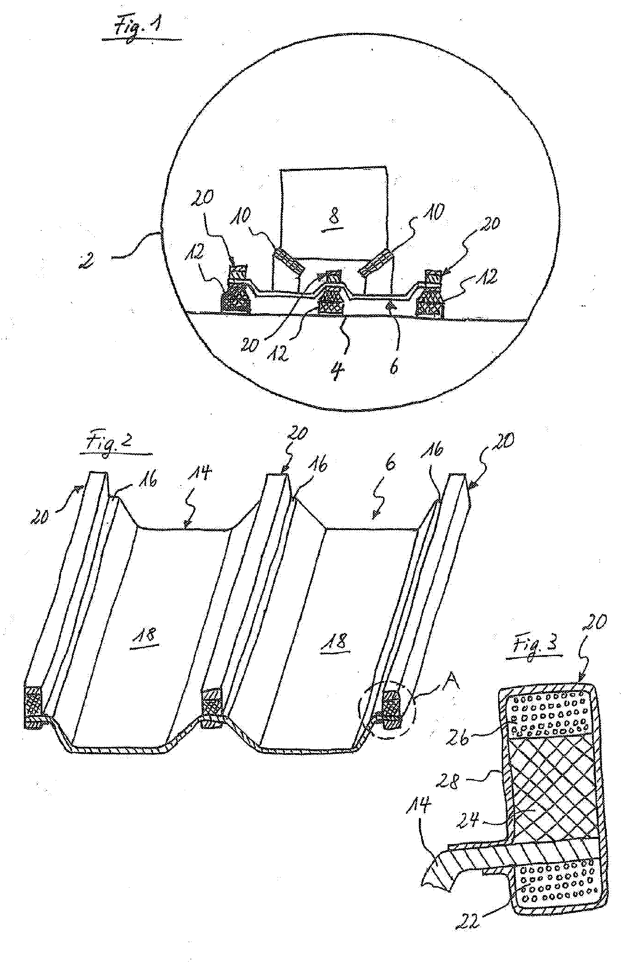

In dem in Fig. 1 dargestellten Druckkörper 2 eines Unterseebootes ist ein Deck 4 angeordnet, das ein Fundament für eine Lagerplattform 6 bildet. Das Deck 4 ist in üblicher Weise mit der Wandung des Druckkörpers 2 starr verbunden. Die Lagerplattform 6 dient zur Lagerung eines bei Betrieb Schwingungen erzeugenden Aggregats 8, das dort auf Gummifedern 10 elastisch gelagert aufgestellt ist. Die Lagerplattform 6 ist über Feder-/Dämpferelemente 12 elastisch auf dem Deck 4 gelagert.

Die Lagerplattform 6 weist einen flächigen Grundkörper 14 auf. Dieser Grundkörper 14 wird von einer Platte gebildet, deren Querschnitt wellenförmig profiliert ist, wobei sich abgeflachte erhöhte Bereiche 16 mit abgeflacht ausgebildeten Vertiefungen 18 abwechseln. Der Grundkörper 14 ist aus einem Faserverbundmaterial in Form eines faserverstärkten Kunststoffs ausgebildet. Dementsprechend ist der Grundkörper 14 vergleichsweise leicht ausgebildet, wobei ihm die in dem Kunststoff eingebetteten Fasern, bei denen es sich um Kohlenstoff- oder Glasfasern handeln kann, eine sehr hohe Festigkeit verleihen. Der Grundkörper 14 wird von einem triaxialen Gelege gebildet, bei dem in einer Kunststoffmatrix gebettete Fasermatten, die jeweils eine unidirektionale Faserausrichtung aufweisen, derart übereinander angeordnet sind, dass sich die Faserausrichtungen der einzelnen Matten deutlich unterscheiden. Hierdurch weist der Grundkörper 14 unabhängig der Richtung einer auf ihn wirkenden Kraft eine sehr hohe Steifigkeit auf.

An den erhöhten Bereichen 16 des Grundkörpers 14 wird der Grundkörper 14 mittels dort angeordneter Träger 20, die sich jeweils über die gesamte Länge der Bereiche 16 erstrecken, zusätzlich versteift. Alle Träger 20 der dargestellten Lagerplattform 6 sind parallel zueinander ausgerichtet. Wie insbesondere aus der in Fig. 3 dargestellten Einzelheit A hervorgeht, sind die Träger 20 mehrschichtig ausgebildet, wobei die Grundplatte 14 in die Träger 20 eingegliedert ist und die aneinander angrenzenden Schichten der Träger 20 stoffschlüssig miteinander verbunden sind. Die übereinander angeordneten Schichten eines jeden Trägers 20 weisen jeweils die gleiche Breite auf.

Jeder der Träger 20 weist einen Abschnitt auf, der an einer Unterseite des Grundkörpers 14 angeordnet ist. Dieser Abschnitt wird von einer Schicht 22 in Form eines in einer Kunststoffmatrix eingebetteten Geleges mit unidirektionaler Faserausrichtung gebildet. Dementsprechend sind alle Fasern innerhalb der Schicht 22 in dergleichen Richtung ausgerichtet, wobei die einzelnen Fasern der Schicht 22 in Richtung der Längsausdehnung der Träger 20 verlaufen. Diese Faserausrichtung verleiht den Trägern 20 insbesondere quer zu deren Längsausdehnung eine besonders hohe Biegesteifigkeit. Bei der Lagerung der Lagerplattform 6 auf den Federelementen 12 bilden die Schichten 22 den Teil der Träger 20, mit dem die Lagerplattform 6 auf den Feder-/Dämpferelementen 12 aufliegt.

An der von der Schicht 22 abgewandten Seite des Grundkörpers 14 schließt sich an Letztgenannten jeweils ein Abschnitt der Träger 20 an, der von einer Schicht 24 aus Schaumstoff gebildet wird. Diese Schicht 24 aus einem aufgeschäumten Kunststoff dient hauptsächlich dazu, den Querschnitt der einzelnen Träger 20 und damit einhergehend das Flächenträgheitsmoment der Träger 20 bei einer zu vernachlässigenden Gewichtszunahme möglichst groß zu gestalten.

An den von dem Grundkörpers 14 abgewandten Seiten schließt sich an die aus Schaumstoff ausgebildeten Schichten 24 jeweils ein Abschnitt der Träger 20 an, der von einer Schicht 26 gebildet wird. Wie die Schichten 22 werden auch die Schichten 26 der Träger 20 jeweils von einem in eine Kunststoffmatrix eingebetteten Gelege mit unidirektionaler Faserausrichtung gebildet, wobei die einzelnen Fasern der Schicht 26 in Richtung der Längsausdehnung der Träger 20 verlaufen und auf diese Weise die Biegesteifigkeit der Träger 20 quer zu deren Längsausdehnung weiter erhöhen.

Jeder der Träger 20 ist mit einem Triaxialgelege 28 aus faserverstärktem Kunststoff ummantelt. Dementsprechend sind die Schichten 22, 24 und 26 sowie der zwischen den Schichten 22 und 24 eingebettete Bereich 16 der Träger 20 vollständig von dem Triaxialgelege 28 umhüllt, wobei Faserlagen des Triaxialgeleges 28 mit unidirektionaler Ausrichtung der Fasern so übereinander angeordnet sind, dass sich die Faserausrichtung der einzelnen Faserlagen unterscheidet. Die Triaxialgelege 28 der einzelnen Träger 20 sind so dimensioniert, dass sie die Bereiche 16 der Grundkörper 14 auch in einem Bereich außerhalb der Träger 20 überlappen.

### Bezugszeichenlisten

- 2: - Druckkörper
- 4: - Deck
- 6: - Lagerplattform
- 8: - Aggregat
- 10: - Gummifeder
- 12: - Feder-/Dämpferelement
- 14: - Grundkörper
- 16: - Bereich
- 18: - Vertiefung
- 20: - Träger
- 22: - Schicht
- 24: - Schicht.
- 26: - Schicht
- 28: - Gelege

- A: - Einzelheit

## Patentansprüche

1. Unterseeboot mit einem Druckkörper (2) und mit einer in dem Druckkörper (2) angeordneten Lagerplattform (6) zum Lagern mindestens eines Aggregats (8), welche aus einem Faserverbundmaterial und Kunststoff ausgebildet ist und einen flächigen Grundkörper (14) aufweist, welcher mittels Trägern (20) versteift ist, **dadurch gekennzeichnet, dass** der Grundkörper (14) in die Träger (20) integriert ist, wobei an beiden Flachseiten des Grundkörpers (14) jeweils ein Abschnitt der Träger (20) auskragt.

2. Unterseeboot nach Anspruch 1, **dadurch gekennzeichnet, dass** die Lagerplattform (6) einstückig ausgebildet ist.

3. Unterseeboot nach einem der vorangehenden Ansprüche, **dadurch gekennzeichnet, dass** die Träger (20) mehrschichtig ausgebildet sind.

4. Unterseeboot nach einem der vorangehenden Ansprüche, **dadurch gekennzeichnet, dass** der Grundkörper (14) aus einem Multiaxialgelege aus Faserverbundmaterial ausgebildet ist.

5. Unterseeboot nach einem der vorangehenden Ansprüche, **dadurch gekennzeichnet, dass** die Abschnitte der Träger (20), die sich an eine erste Flachseite des Grundkörpers (14) anschließen, jeweils von einer unidirektionalen Schicht (22) aus Faserverbundmaterial gebildet werden.

6. Unterseeboot nach Anspruch 5, **dadurch gekennzeichnet, dass** die Abschnitte der Träger (20), die sich an eine zweite Flachseite des Grundkörpers (14) anschließen, jeweils von einer Schicht (24) aus Schaumstoff gebildet werden.

7. Unterseeboot nach Anspruch 6, **dadurch gekennzeichnet, dass** sich an die Schicht (24) aus Schaumstoff an einer von dem Grundkörper (14) abgewandten Seite eine unidirektionalen Schicht (26) aus Faserverbundmaterial anschließt.

8. Unterseeboot nach einem der vorangehenden Ansprüche, **dadurch gekennzeichnet, dass** die Träger (20) mit einem Multiaxialgelege (28) aus Faserverbundmaterial ummantelt sind.

## Claims

1. Submarine having a pressure body (2) and having a mounting platform (6) which is arranged in the pressure body (2) and intended for mounting at least one unit (8), which mounting platform is formed from a fibre composite material and plastic and comprises a planar basic body (14) which is reinforced by means of carriers (20), **characterized in that** the basic body (14) is integrated into the carriers (20), wherein in each case a portion of the carriers (20) projects on both flat sides of the basic body (14).

2. Submarine according to Claim 1, **characterized in that** the mounting platform (6) is formed in one piece.

3. Submarine according to one of the preceding claims, **characterized in that** the carriers (20) are of multi-layered design.

4. Submarine according to one of the preceding claims, **characterized in that** the basic body (14) is formed from a multi-axial laid scrim of fibre composite material.

5. Submarine according to one of the preceding claims, **characterized in that** the portions of the carriers (20) which adjoin a first flat side of the basic body (14) are in each case formed from a uni-directional layer (22) of fibre composite material.

6. Submarine according to Claim 5, **characterized in that** the portions of the carriers (20) which adjoin a second flat side of the basic body (14) are in each case formed from a layer (24) of foam.

7. Submarine according to Claim 6, **characterized in that** a uni-directional layer (26) of fibre composite material adjoins the layer (24) of foam on a side facing away from the basic body (14).

8. Submarine according to one of the preceding claims, **characterized in that** the carriers (20) are enveloped by a multi-axial laid scrim (28) of fibre composite material.

## Revendications

1. Submersible avec une coque épaisse (2) et avec une plate-forme de montage (6) disposée dans la coque épaisse (2) pour le montage d'au moins un groupe (8), qui est formée d'un matériau composite fibreux et de matière plastique et qui présente un corps de base plat (14), qui est renforcé au moyen de supports (20), **caractérisé en ce que** le corps de base (14) est intégré dans les supports (20), dans lequel une partie des supports (20) est saillante respectivement sur les deux côtés plats du corps de base (14).

2. Submersible selon la revendication 1, **caractérisé en ce que** la plate-forme de montage (6) est réalisée en une seule pièce.

3. Submersible selon l'une quelconque des revendications précédentes, **caractérisé en ce que** les supports (20) sont réalisés en plusieurs couches.

4. Submersible selon l'une quelconque des revendications précédentes, **caractérisé en ce que** le corps de base (14) est formé en un non tissé multiaxial en matériau composite fibreux.

5. Submersible selon l'une quelconque des revendications précédentes, **caractérisé en ce que** les parties des supports (20), qui se raccordent à un premier côté plat du corps de base (14), sont formées respectivement par une couche unidirectionnelle (22) de matériau composite fibreux.

6. Submersible selon la revendication 5, **caractérisé en ce que** les parties des supports (20), qui se raccordent à un deuxième côté plat du corps de base (14), sont formées respectivement par une couche (24) de matière expansée.

7. Submersible selon la revendication 6, **caractérisé en ce qu'**une couche unidirectionnelle (26) de matériau composite fibreux se raccorde à la couche (24) de matière expansée sur un côté détourné du corps de base (14).

8. Submersible selon l'une quelconque des revendications précédentes, **caractérisé en ce que** les supports (20) sont enveloppés avec un non tissé multiaxial (28) en matériau composite fibreux.
